# EUROPEAN PATENT SPECIFICATION

(11) **EP 2 799 558 B1**
(45) Date of publication and mention of the grant of the patent: **08.03.2017**
(21) Application number: 12861801.4
(22) Date of filing: 11.10.2012
(51) Int. Cl.: C21B 13/00

(54) **IRON ORE POWDER REDUCING DEVICE, MOLTEN IRON AND REDUCED IRON PRODUCING DEVICE AND METHOD FOR SAME**
EISENERZSTAUB-REDUZIERUNGSVORRICHTUNG, VORRICHTUNG ZUR HERSTELLUNG VON GESCHMOLZENEM EISEN UND REDUZIERTEM EISEN UND VERFAHREN DAFÜR
DISPOSITIF DE RÉDUCTION DE POUDRE DE MINERAI DE FER, DISPOSITIF DE PRODUCTION DE FER FONDU ET DE FER RÉDUIT ET PROCÉDÉ CORRESPONDANT

(30) Priority: 28.12.2011 KR 20110145302
(43) Date of publication of application: 05.11.2014
(73) Proprietor: POSCO, Gyeongsangbuk-do 790-300 (KR)
(72) Inventor: JEONG, Sunkwang, Pohang-si Gyeongsangbuk-do790-300 (KR); YI, Sang-Ho, Pohang-si Gyeongsangbuk-do 790-300 (KR); YOUN, Ja-Young, Pohang-si Gyeongsangbuk-do 790-300 (KR)
(74) Representative: Potter Clarkson LLP
(86) International application number: PCT/KR2012/008244
(87) International publication number: WO 2013/100333

(56) References cited:
- CN-A- 101 660 017
- JP-A- H10 506 960
- JP-A- 2002 363 624
- KR-A- 19990 053 880
- KR-A- 20030 017 099

## Description

### [Technical Field]

The present invention relates to a reduction apparatus of a fine iron ore and an apparatus manufacturing an ingot iron and a reduced iron including the same, and more particularly, to a reduction apparatus of a fine iron ore, in which reduction and mineral dressing of the iron ore can be performed simultaneously when the iron ore having a low grade is reduced, and an apparatus manufacturing an ingot iron and a reduced iron including the same.

### [Background Art]

An iron ore used in an existing ingot iron manufacturing process typically has been a high grade ore, but in accordance with a global increase in use of the high grade ore, reserves of the high grade ore have gradually exhausted, and thus, currently, use of a low grade ore containing a gangue component in a large amount has tended to increase.

The low grade ore is used in a situation where after the gangue component is removed through pre-mineral dressing treatment, the grade is improved. In the case where the low grade ore is used without the pre-mineral dressing treatment, since the gangue content in an ore charge amount is very high, the generated amount of slag is greatly increased and thus melting heat of the slag is required. Accordingly, an increase in reducing agent ratio is accompanied by an increase in manufacturing cost and an operation load resulting from discharging of a large amount of slag and thus by reduced molten iron productivity and greatly increased the manufacturing cost.

Meanwhile, Chinese Patent No. CN200810042199.9 discloses separation of the gangue from all reduced ores discharged through a reduction step of magnetite, as an existing art for manufacturing the ingot iron by directly using the low grade ore, and removing the gangue in a fluidization reduction process to produce a high grade reduced iron.

Since in the aforementioned Chinese Patent, large particles and ultra-minute particles are not divided but the gangue is separated from the entire particles, a magnetic separation treatment amount is increased in proportion to a charge amount, and thus a scale thereof is very large, and separation efficiency of the gangue is very low as a result of treating the large particles having the low gangue content together.

Further, in the case where the gangue component is separated and removed only in the reduction step of magnetite during the fluidization reduction process and thus the gangue component is not removed in this step, the reduced iron and the ingot iron include the gangue by itself, and thus there may be a limitation in use of the low grade ore.

The above information disclosed in this Background section is only for enhancement of understanding of the background of the invention and therefore it may contain information that does not form the prior art that is already known in this country to a person of ordinary skill in the art.

### [DISCLOSURE]

### [Technical Problem]

The present invention has been made in an effort to provide a reduction apparatus of a fine iron ore, in which a previous mineral dressing treatment process of a low grade ore can be omitted and reduction and mineral dressing treatment can be performed simultaneously during a reduction process, and an apparatus for manufacturing an ingot iron and a reduced iron including the same.

### [Technical Solution]

An exemplary embodiment of the present invention provides a reduction apparatus for reducing a fine iron ore including: a granulated ore pre-reduction furnace into which the fine iron ore is charged to be pre-reduced by a reduction gas; an ultra-fine ore pre-reduction furnace into which an ultra-fine ore scattered in and discharged from the granulated ore pre-reduction furnace is charged to be pre-reduced; a first magnetic separator separating and then discharging a gangue component from the ultra-fine ore reduced in the ultra-fine ore pre-reduction furnace; at least one intermediate reduction furnace into which the granulated ore reduced in and discharged from the granulated ore pre-reduction furnace and the ultra-fine ore from which the gangue component is separated are charged to be further reduced and thus increase a reduction ratio of the granulated ore and the ultra-fine ore; and a final reduction furnace finally reducing the granulated ore and the ultra-fine ore reduced in and discharged from the intermediate reduction furnace to manufacture a reduced iron.

The intermediate reduction furnace may include a plurality of sequentially connected fluidized-reduction furnaces.

The final reduction furnace may include a granulated ore final reduction furnace into which the granulated ore and the ultra-fine ore reduced in the intermediate reduction furnace are charged to manufacture the reduced iron, and an ultra-fine ore final reduction furnace into which the ultra-fine ore scattered in and discharged from the granulated ore final reduction furnace is charged to manufacture the reduced iron.

The reduction apparatus may further include a second magnetic separator for removing the gangue component from the reduced iron discharged from the ultra-fine ore final reduction furnace.

Another exemplary embodiment of the present invention provides an apparatus for manufacturing an ingot iron and a reduced iron, including: a first reduction apparatus including the aforementioned reduction apparatus; a charge bin for storing or further reducing the reduced iron manufactured by the first reduction apparatus; a melting gasifier into which the reduced iron discharged from the charge bin and a breeze supplied from an outside are charged and oxygen is blown to manufacture the ingot iron and a reduction gas; a second reduction apparatus disposed to be spaced apart from the first reduction apparatus and including a multi-stage fluidized-reduction furnace or a shaft furnace; and a first reforming apparatus removing carbon dioxide from an exhaust gas that is discharged from the first reduction apparatus and the second reduction apparatus and then branched, in which the reduction gas manufactured in the melting gasifier is supplied to the first reduction apparatus, and the exhaust gas from which carbon dioxide is removed by the first reforming apparatus is supplied to the second reduction apparatus.

The apparatus may further include a second reforming apparatus removing carbon dioxide from the exhaust gas before a portion of the exhaust gas discharged from the first reduction apparatus is branched and then mixed with the reduction gas discharged from the melting gasifier.

The apparatus may further include a particle separation apparatus separating particles from the reduction gas discharged from the melting gasifier and then mixed with the exhaust gas from which carbon dioxide is removed, re-charging the separated particles into the melting gasifier, and supplying the reduction gas from which the particles are separated to the first reduction apparatus or the charge bin.

The apparatus may further include a temperature increasing apparatus for increasing a temperature of the exhaust gas to a predetermined temperature before the exhaust gas from which carbon dioxide is removed by the first reforming apparatus is supplied to the second reduction apparatus.

The apparatus may further include a first storage bin for temporarily storing the reduced iron manufactured in the first reduction apparatus before being supplied to the charge bin.

The apparatus may further include a first agglomerating body manufacturing apparatus for agglomerating the reduced iron discharged from the first storage bin before being supplied to the charge bin.

The apparatus may further include in the case where the second reduction apparatus includes the multi-stage fluidized-reduction furnace, a second storage bin temporarily storing the reduced iron manufactured in the second reduction apparatus before being manufactured in an agglomerate form.

The apparatus may further include a second agglomerating body manufacturing apparatus for agglomerating the reduced iron discharged from the second storage bin.

Yet another exemplary embodiment of the present invention provides an apparatus for manufacturing an ingot iron and a reduced iron, including: a first reduction apparatus including the aforementioned reduction apparatus; a charge bin for storing or further reducing the reduced iron manufactured by the first reduction apparatus; a melting gasifier into which the reduced iron discharged from the charge bin and a breeze supplied from an outside are charged and oxygen is blown to manufacture the ingot iron and a reduction gas; a second reduction apparatus disposed to be spaced apart from the first reduction apparatus and including a multi-stage fluidized-reduction furnace or a shaft furnace; and a first reforming apparatus removing carbon dioxide from an exhaust gas that is discharged from the first reduction apparatus and the second reduction apparatus and then branched, in which the reduction gas discharged from the melting gasifier is mixed with the exhaust gas from which carbon dioxide is removed, and then supplied to the first reduction apparatus and the second reduction apparatus.

A portion of the reduction gas discharged from the melting gasifier and then mixed with the exhaust gas from which carbon dioxide is removed may be supplied to the charge bin.

The apparatus may further include a particle separation apparatus separating particles and gases from the reduction gas discharged from the melting gasifier and then mixed with the exhaust gas from which carbon dioxide is removed.

Still another exemplary embodiment of the present invention provides a method of manufacturing an ingot iron and a reduced iron, including: manufacturing the reduced iron by performing magnetic separation while reducing a fine iron ore by using a multi-stage fluidized-reduction furnace and a magnetic separation apparatus; manufacturing the ingot iron and a reduction gas by charging the reduced iron and a breeze supplied from an outside into a melting gasifier and then blowing oxygen; further manufacturing the reduced iron by reducing the fine iron ore or a pellet using a reduction apparatus disposed to be spaced apart from the multi-stage fluidized-reduction furnace; and branching an exhaust gas that is discharged from the multi-stage fluidized-reduction furnace and the reduction apparatus and then removing carbon dioxide, in which the reduction gas manufactured in the melting gasifier is supplied to the multi-stage fluidized-reduction furnace, and the exhaust gas from which carbon dioxide is removed is supplied to the reduction apparatus.

The method may further include supplying the reduced iron manufactured by the multi-stage fluidized-reduction furnace and a magnetic separation apparatus to a charge bin in order to store or further reduce the reduced iron before being charged into the melting gasifier.

The method may further include agglomerating the reduced iron manufactured by the multi-stage fluidized-reduction furnace and the magnetic separation apparatus.

The method may further include branching a portion of the exhaust gas discharged from the multi-stage fluidized-reduction furnace, then removing carbon dioxide, and mixing the portion of the exhaust gas with the reduction gas discharged from the melting gasifier.

The method may further include separating particles from the reduction gas discharged from the melting gasifier to be then mixed with the exhaust gas from which carbon dioxide is removed, re-charging the separated particles into the melting gasifier, and supplying the reduction gas from which the particles are separated to the multi-stage fluidized-reduction furnace or the charge bin.

The reduction apparatus may be the multi-stage fluidized-reduction furnace or a shaft furnace.

Still yet another exemplary embodiment of the present invention provides a method of manufacturing an ingot iron and a reduced iron, including: manufacturing the reduced iron by performing magnetic separation while reducing a fine iron ore by using a multi-stage fluidized-reduction furnace and a magnetic separation apparatus; manufacturing the ingot iron and a reduction gas by charging the reduced iron and a breeze supplied from the outside into a melting gasifier and then blowing oxygen; and further manufacturing the reduced iron by reducing the fine iron ore or a pellet using a reduction apparatus disposed to be spaced apart from the multi-stage fluidized-reduction furnace, in which the reduction gas manufactured in the melting gasifier is supplied to the multi-stage fluidized-reduction furnace and the reduction apparatus.

The method may further include supplying the reduced iron manufactured by the multi-stage fluidized-reduction furnace and a magnetic separation apparatus to a charge bin in order to store or further reduce the reduced iron before being charged into the melting gasifier.

The method may further include agglomerating the reduced iron manufactured by the multi-stage fluidized-reduction furnace and the magnetic separation apparatus.

The method may further include branching a portion of an exhaust gas discharged from the multi-stage fluidized-reduction furnace, then removing carbon dioxide, and mixing the portion of the exhaust gas with the reduction gas discharged from the melting gasifier.

The method may further include separating particles from the reduction gas discharged from the melting gasifier and then mixed with the exhaust gas from which carbon dioxide is removed, re-charging the separated particles into the melting gasifier, and supplying the reduction gas from which the particles are separated to the multi-stage fluidized-reduction furnace or the charge bin.

The reduction apparatus may be the multi-stage fluidized-reduction furnace or a shaft furnace.

### [Advantageous Effects]

According to the exemplary embodiments of the present invention, it is possible to apply a low grade ore to a fluidization reducing process without a separate mineral dressing process and thus increase use of the low grade ore and competitiveness of an iron making process.

Further, since only ultra-fine powder having a high gangue content is subjected to magnetic separation, it is possible to increase separation efficiency of a gangue, reduce a capacity of a magnetic separator, and reduce a production cost of molten iron, and reduce use of a reducing agent according to the use of the low-priced low grade ore.

### [Description of the Drawings]

FIG. 1 is a view illustrating a constitution of a reduction apparatus of a fine direct reduced iron according to an exemplary embodiment of the present invention.
FIG. 2 is a view illustrating the constitution of the reduction apparatus of the fine direct reduced iron according to the exemplary embodiment of the present invention, and illustrates that an intermediate reduction furnace is constituted by multi-stages (plural).
FIG. 3 is a view illustrating the constitution of the reduction apparatus of the fine direct reduced iron according to the exemplary embodiment of the present invention, and illustrates that a final reduction furnace is constituted by a twin fluidized-bed reactor, that is, a granulated ore final reduction furnace and an ultra-fine ore final reduction furnace, and a magnetic separator is further disposed.
FIG. 4 is a view schematically illustrating a constitution of an apparatus of manufacturing an ingot iron and a reduced iron according to another exemplary embodiment of the present invention. FIG. 4 illustrates that carbon dioxide is removed from an exhaust gas discharged from the apparatus of manufacturing the ingot iron and the reduced iron, and the exhaust gas is then blown back to the apparatus of manufacturing the reduced iron to manufacture the reduced iron.
FIG. 5 is a view schematically illustrating the constitution of the apparatus of manufacturing the ingot iron and the reduced iron according to another exemplary embodiment of the present invention. FIG. 5 is a view illustrating that a reduction gas manufactured in a melting gasifier constituting the apparatus of manufacturing the ingot iron is branched to be supplied to each reduction furnace.
FIG. 6 is a view schematically illustrating the apparatus of manufacturing the ingot iron and the reduced iron, in which the apparatus of manufacturing the reduced iron illustrated in FIG. 4 is changed into a shaft furnace.
FIG. 7 is a view schematically illustrating the apparatus of manufacturing the ingot iron and the reduced iron, in which the apparatus of manufacturing the reduced iron illustrated in FIG. 5 is changed into the shaft furnace.

### [Mode for Invention]

Advantages and features of the present invention and methods to achieve them will be elucidated from exemplary embodiments described below in detail with reference to the accompanying drawings. The present invention is not limited by the following disclosed exemplary embodiments but may be implemented in various different forms; and exemplary embodiments introduced herein are provided to make the disclosure of contents thorough and complete and sufficiently disclosure the invention to those skilled in the art. Therefore, the present invention will be defined only by the scope of the appended claims. Like reference numerals designate like elements throughout the specification.

Hereinafter, referring to the accompanying drawings, a reduction apparatus of a fine direct reduced iron according to an exemplary embodiment of the present invention includes a granulated ore pre-reduction furnace 10 into which a fine iron ore is charged to be pre-reduced by a reduction gas; an ultra-fine ore pre-reduction furnace 20 into which an ultra-fine ore scattered in the granulated ore pre-reduction furnace 10 to be discharged is charged to be pre-reduced, a first magnetic separator 30 separating a gangue component from the ultra-fine ore reduced in the ultra-fine ore pre-reduction furnace 20 and then discharged; at least one intermediate reduction furnace 40 into which the granulated ore reduced in the granulated ore pre-reduction furnace 10 to be discharged and the ultra-fine ore from which the gangue component is separated are charged to be further reduced and thus increase a reduction ratio of the granulated ore and the ultra-fine ore; and a final reduction furnace 50 finally reducing the granulated ore and the ultra-fine ore reduced in the intermediate reduction furnace 40 to be discharged to manufacture a reduced iron.

As the fine iron ore, a low grade ore having a high gangue content such as SiO₂ and Al₂O₃ may be used. The low grade ore may be a powder ore type. In the case where the low grade ore is fluidized and reduced, an ultra-minute ore (ultra-fine iron ore) generated by degradation during a fluidization and reduction process may include a large amount of gangue component.

A particle size of the fine iron ore charged from a fine iron ore charging bath into the granulated ore pre-reduction furnace is 8 mm or less.

In other words, when the iron ore is reduced from hematite (Fe₂O₃) to magnetite (Fe₃O₄), reduction degradation occurs due to volume expansion, further, the iron ore is degraded by thermal and mechanical impacts and the like during fluidization in a fluidized-reduction furnace, and the gangue component is concentrated in the ultra-minute ore generated by degradation.

The powder ore type of fine iron ore is charged into the granulated ore pre-reduction furnace 10 to be reduced to magnetite (Fe₃O₄) during a fluidization reduction process, and in this case, the ultra-fine ore scattered in the granulated ore pre-reduction furnace 10 to be discharged is charged into the ultra-fine ore pre-reduction furnace 20 to be reduced into magnetite.

A particle size range of the granulated ore (granulated fine iron ore) corresponds to 0.1 to 8 mm. Further, a particle size range of the ultra-fine ore is 100 µm or less.

As the granulated ore pre-reduction furnace 10, a cylindrical type fluidized-reduction furnace may be used, and since an upper portion and a lower portion of a distributing plate are cylinders having the same diameter, the same fluidization occurs on the upper/lower portions of the distributing plate, and thus the ultra-fine (ultra-minute) ore having a predetermined particle size may be easily discharged through an outlet of an upper portion of the furnace.

Further, in the granulated ore pre-reduction furnace 10, a cyclone for collecting fine powder scattered in a fluidized bed and re-collecting the fine powder back into the fluidized bed may not be disposed.

Meanwhile, as the ultra-fine ore pre-reduction furnace 20, a fluidized bed reduction furnace may be used, and since the ultra-fine ore pre-reduction furnace 20 has a shape such that the furnace of the upper portion of the distributing plate is tapered, a flow of the reduction gas through the distributing plate becomes smooth during movement to an upper portion of the furnace, and thus the ultra-fine (ultra-minute) ore may be not scattered from the fluidized bed in a large amount, and a reduction reaction may easily occur in the fluidized bed.

Further, fine powder scattered in the fluidized bed may be collected back to be re-collected in the fluidized bed by disposing the cyclone for collecting fine powder in the ultra-fine ore pre-reduction furnace 20.

Temperature ranges of the granulated and ultra-fine ore pre-reduction furnaces 10 and 20 are 350°C to 550°C, and the ore reduced in each pre-reduction furnace is present in a magnetite form. A Curie temperature (threshold temperature at which a magnetic property is maintained) of magnetite is 575°C.

Components of the reduction gas for reducing the fine iron ore in the pre-reduction furnace include CO, CO₂, H₂, H₂O, N₂, and the like.

In the case where the gangue is not sufficiently removed in a reduction step to magnetite, as will be described below, the gangue contained in a large amount in the ultra-fine ore (ultra-minute ore) may be further separated by using magnetic separation in a step of generating the reduced iron, which is a final reduction step.

In this case, the fluidization reduction temperature in the final reduction step is 760°C or less, and the reduction gas includes CO, CO₂, H₂, H₂O, N₂, and the like.

Since the content of the gangue is largely increased in the ultra-minute ore (ultra-fine ore) generated by degradation during a fluidization reduction reaction of the iron ore, a twin fluidized-bed reactor constituted by the granulated ore pre-reduction furnace 10 and the ultra-fine ore pre-reduction furnace 20 may be used in order to separate the fine iron ore into granules and ultra-fine particles in the reduction step of magnetite to reduce the fine iron ore.

That is, the charged iron ore is separated into the granules and ultra-minute particles in the reduction step to magnetite, the granules having the relatively small gangue content are reduced and then discharged to the fluidized-reduction furnace of a next step, and the ultra-minute particles having the high gangue content pass through the magnetic separator to separate the gangue to reduce the gangue content of the ore and are then discharged to the fluidized-reduction furnace of the next step, thus continuously further reducing the granules and the ultra-minute particles.

Further, as described above, in the case where a removal amount of the gangue of the ultra-minute particles in the reduction step of magnetite is not sufficient, the gangue component may be further removed from the ultra-minute particles degraded through an additional reduction step by using the twin fluidized-bed reactor in the final reduction step like the reduction step of magnetite to further improve a final grade of the reduced iron.

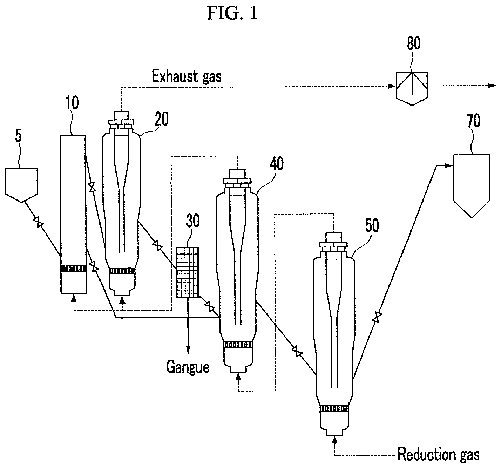

FIG. 1 is a fluidization reduction operation process, in which the fine iron ore is charged from a fine iron ore charge bin 5 into the granulated ore pre-reduction furnace 10 that is one of the twin fluidized-reduction furnaces and then fluidization-reduced into magnetite, the ultra-minute ore (ultra-fine iron ore) is scattered to move into the ultra-fine ore pre-reduction furnace 20, and only the granulated ore remains in the granulated ore pre-reduction furnace 10 to be fluidization-reduced and discharged to the fluidized-reduction furnace of the next step.

In FIG. 1, the distributing plate through which the reduction gas is blown is disposed in lower portions of insides of the ultra-fine ore pre-reduction furnace 20, the intermediate reduction furnace 40, and the final reduction furnace 50, and the cyclone for collecting the fine ore is disposed in upper portions of insides of the furnaces.

Supplementary materials such as limestone and dolomite may be added together when the fine iron ore is reduced to be charged into the granulated ore pre-reduction furnace 10. In the case where the reduced iron finally reduced to be discharged in the reduction apparatus for fine iron ore of the present application is melted in subsequent melting furnaces, electric furnaces, and the like, the supplementary materials such as limestone and dolomite may be added in order to reduce a melting point of the gangue component contained in the reduced iron, melt the gangue component, and exhaust the gangue component in a slag form.

Meanwhile, the ultra-minute powder scattered to move immediately after charging while contained in the charged ore as well as the ultra-minute powder generated while the fine iron ore is degraded to magnetite in the granulated ore pre-reduction furnace 10 is reduced to magnetite in the ultra-fine ore pre-reduction furnace 20.

Further, only magnetite may be discharged to the intermediate reduction furnace 40, as will be described next, by charging the ultra-fine ore containing magnetite discharged after being reduced in the ultra-fine ore pre-reduction furnace 20 into the first magnetic separator 30 to separate the particles having a magnetic property, that is, magnetite, and the gangue (that is a non-magnetic material) from the ultra-fine ore.

As described above, separation efficiency in the magnetic separator may be largely increased and a capacity of the magnetic separator may be optimized by removing only the gangue of the ultra-fine ore having the high gangue content.

The reduction apparatus for fine iron ore may further include at least one intermediate reduction furnace 40 into which the granulated ore reduced in the granulated ore pre-reduction furnace 10 to be discharged and the ultra-fine ore from which the gangue component is separated are charged to be further reduced, thereby increasing a reduction ratio of the granulated ore and the ultra-fine ore.

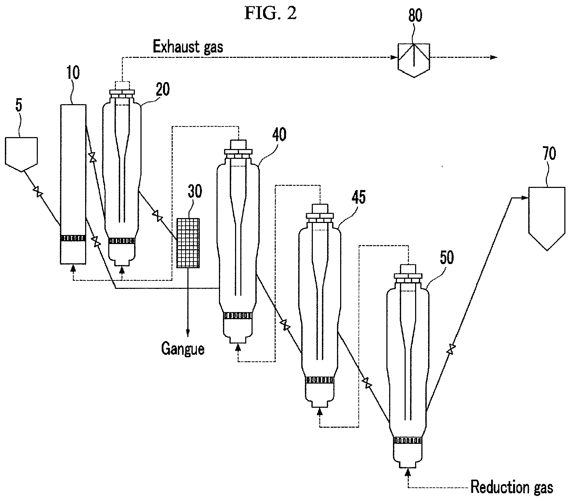

As illustrated in FIG. 2, the intermediate reduction furnace 40 may include a plurality of (multi-stage) sequentially connected fluidized-reduction furnaces 40 and 45.

High grade magnetite having the increased grade sequentially passes through the fluidized-reduction furnaces of the next steps to be further reduced and thus discharged as high grade reduced iron after being reduced in the final reduction furnace 50.

As described above, the manufactured high grade reduced iron may be charged into the melting furnace to largely reduce the generation amount of slag when an ingot iron is manufactured, thereby contributing to a reduction in reducing agent ratio to largely reduce a manufacturing cost of the ingot iron.

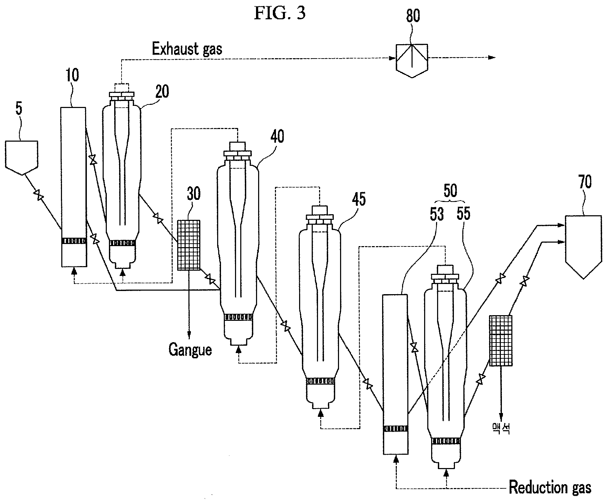

FIG. 3 is a view illustrating that the final reduction furnace 50 is constituted by the twin fluidized-reduction furnace, that is, a granulated ore final reduction furnace 53 and an ultra-fine ore final reduction furnace 55.

The final reduction furnace 50 includes the granulated ore final reduction furnace 53 into which the granulated ore and the ultra-fine ore are charged to manufacture the reduced iron, and the ultra-fine ore final reduction furnace 55 into which the ultra-fine ore scattered in the granulated ore final reduction furnace 53 to be discharged is charged to manufacture the reduced iron.

The reduction apparatus for fine iron ore may further include a second magnetic separator 60 for removing the gangue component from the reduced iron discharged from the ultra-fine ore final reducing furnace 55.

Meanwhile, in the sequentially connected fluidized-reduction furnaces, when the gangue component is separated by using the twin fluidized-reduction furnace for pre-reduction, in the case where a removal amount of the gangue of the ultra-fine ore is not sufficient, the final reduction furnace 50 may be disposed in a twin fluidized-reduction furnace mode.

As described above, the granulated ore of the granulated ore and the fine ore sequentially passing through a reduction process in an entire step of the final reduction furnace 50 may be finally reduced into the reduced iron in the granulated ore final reduction furnace 53 by disposing the final reduction furnace 50 in the twin fluidized-reduction furnace mode.

Further, after the ultra-minute ore containing a large amount of the gangue scattered to move in the granulated ore final reduction furnace 53 is further reduced in the ultra-fine ore final reduction furnace 55 to manufacture the reduced iron, the reduced iron may be charged into the second magnetic separator 60 to separate a metallic iron having a magnetic property and the non-magnetic gangue to remove only the gangue and then exhaust only the metallic iron to a reduced iron storage bin 70.

A temperature range of the granulated and ultra-fine ore final reduction furnaces 53 and 55 is 760°C or less, and the ore reduced in each final reduction furnace 50 is present in a metallic iron (metallic Fe) form. A Curie temperature (threshold temperature at which the magnetic property is maintained) of the metallic iron is 768°C.

Accordingly, the content of the gangue of the reduced iron discharged in the fluidized-reduction furnace may be further reduced to produce the high grade reduced iron.

A flow of the reduction gas is blown through the distributing plate at a lower portion of the final reduction furnace 50 (granulated and ultra-fine ore final reduction furnaces 53, 55) to reduce the iron ore in the fluidized bed and then be discharged at an upper portion of the furnace, and the discharged reduction gas is blown through the distributing plate at a lower portion of the intermediate reduction furnace 40 to reduce the iron ore in the fluidized bed and then be discharged at an upper portion of the furnace.

The reduction gas discharged from the intermediate reduction furnace 40 is blown through the distributing plate at lower portions of the granulated and ultra-minute ore pre-reduction furnaces to pre-heat and pre-reduce the iron ore and then be discharged at upper portions of the pre-reduction furnaces, and the discharged reduction gas (exhaust gas) is subjected to cooling and dust elimination processes by a scrubber 80 and the like.

That is, in the reduction apparatus of the fine iron ore according to the present invention, a direction in which the iron ore is reduced and then progresses is opposite to a progress direction of the reduction gas.

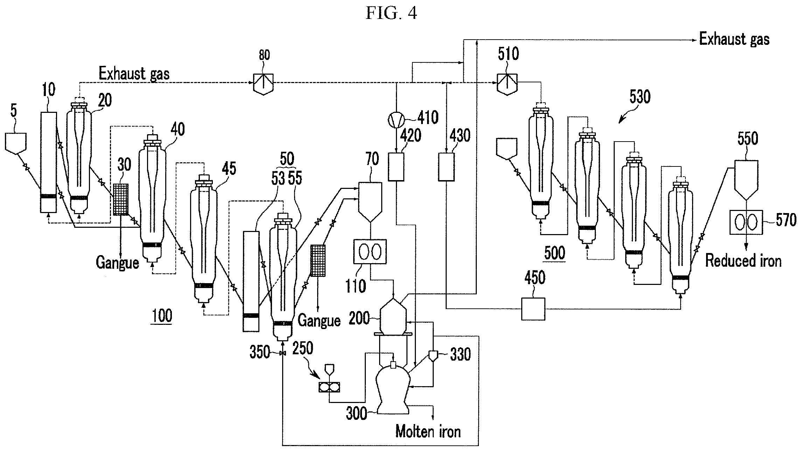

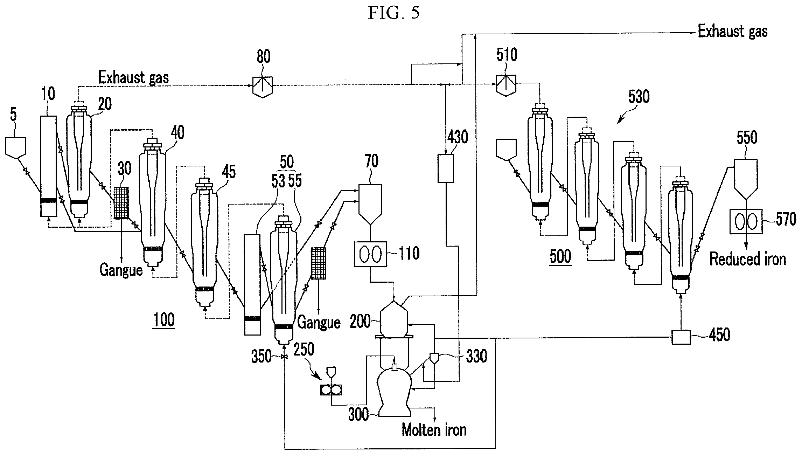

FIGS. 4 and 5 are views schematically illustrating a constitution of an apparatus of manufacturing the ingot iron and the reduced iron according to the exemplary embodiment of the present invention.

Referring to FIGS. 4 and 5, the apparatus for manufacturing the ingot iron and the reduced iron according to the present invention includes a first reduction apparatus 100 including a multi-stage fluidized-reduction furnace and the magnetic separator, a charge bin 200 for storing or further reducing the reduced iron manufactured by the first reduction apparatus 100, a melting gasifier 300 into which the reduced iron discharged from the charge bin 200 and a breeze supplied from an outside are charged and oxygen is blown to manufacture the ingot iron and a reduction gas, a second reduction apparatus 500 disposed to be spaced apart from the first reduction apparatus 100 and including a multi-stage fluidized-reduction furnace 530 or a shaft furnace 600, and a first reforming apparatus 430 removing carbon dioxide from an exhaust gas that is discharged from the first reduction apparatus 100 and the second reduction apparatus 500 and then branched, the reduction gas manufactured in the melting gasifier 300 being supplied to the first reduction apparatus 100, and the exhaust gas from which carbon dioxide is removed by the first reforming apparatus 430 being supplied to the second reduction apparatus 500.

The first reduction apparatus 100 includes the reduction apparatus of the fine direct reduced iron based on the aforementioned FIGS. 1 to 3.

The reduced iron manufactured in the first reduction apparatus 100 is stored in the charge bin 200 before being charged into a melting reduction furnace 300 for final reduction. The reduced iron stored in the charge bin 200 may be further reduced by the reduction gas generated in the melting reduction furnace 300.

The reduced iron manufactured by the first reduction apparatus 100 may be temporarily stored in a first storage bin 70 before being supplied to the charge bin 200.

The reduced iron discharged from the first storage bin 70 may be supplied to the charge bin 200 by being agglomerated through a first agglomerating body manufacturing apparatus 110 before supplied to the charge bin 200.

The reduced iron discharged from the charge bin 200 and a breeze supplied from an external breeze supplier 250 are charged and oxygen is then blown into the melting reduction furnace 300 to melt the reduced iron by combustion heat of the breeze to manufacture the ingot iron and generate the reduction gas by combustion of the breeze.

The second reduction apparatus 500 is disposed to be spaced apart from the first reduction apparatus 100 including the multi-stage fluidized-reduction furnace and the magnetic separator, and reduces the iron ore to manufacture the reduced iron. The second reduction apparatus 500 may include the multi-stage fluidized-reduction furnace 530 or the shaft furnace 600.

Meanwhile, the exhaust gas discharged from the multi-stage fluidized-reduction furnace constituting the first reduction apparatus 100 and the exhaust gas discharged from the second reduction apparatus 500 pass through scrubbers 80 and 510, respectively, to remove impurities such as dust, are branched, and passes through the first reforming apparatus 430 to remove carbon dioxide contained in the exhaust gas and thus increase the content of the reduction gas such as carbon monoxide and hydrogen in the exhaust gas.

In the case where the second reduction apparatus 500 includes the multi-stage fluidized-reduction furnace 530, the fine iron ore is charged to manufacture the reduced iron using the reduction gas, and in the case where the second reduction apparatus 500 includes the shaft furnace 600, a pellet obtained by processing the fine iron ore is charged to manufacture the reduced iron using the reduction gas.

Meanwhile, a portion of the exhaust gas discharged from the first reduction apparatus 100 is branched to be mixed with the reduction gas discharged from the melting gasifier 300.

In this case, before the exhaust gas is mixed with the reduction gas discharged from the melting reduction furnace 300, carbon dioxide is removed from the exhaust gas through a second reforming apparatus 420 to increase the content of the reduction gas such as carbon monoxide and hydrogen contained in the exhaust gas. Before the exhaust gas is supplied to the second reforming apparatus 420, the exhaust gas may pass through a compressor 410 to manufacture a compression gas.

By mixing the reduction gas discharged from the melting gasifier 300 with the exhaust gas from which carbon dioxide is removed, the temperature of the reduction gas may be adjusted to a temperature (700 to 800°C) suitable to reduce the iron ore in the multi-stage fluidized-reduction furnace constituting the first reduction apparatus 100.

Further, the reduction gas discharged from the melting gasifier 300 and then mixed with the exhaust gas from which carbon dioxide is removed passes through a particle separation apparatus 330 to separate particles, the separated particles are re-charged into the melting gasifier 300, and the reduction gas from which the particles are separated is supplied to the first reduction apparatus 100 or the charge bin 200.

A cyclone may be used as the particle separation apparatus.

Before the exhaust gas from which carbon dioxide is removed by the first reforming apparatus 430 is supplied to the second reduction apparatus 500, the exhaust gas may pass through a temperature increasing apparatus 450 to increase the temperature to a temperature suitable to reduce the iron ore.

An oxygen burner, a LNG burner, and the like may be used as the temperature increasing apparatus 450.

Meanwhile, in the case where the second reduction apparatus 500 includes the multi-stage fluidized-reduction furnace 530, before the reduced iron manufactured in the second reduction apparatus 530 is manufactured in an agglomerate form, a second storage bin 550 temporarily storing the reduced iron may be further included.

Further, a second agglomerating body manufacturing apparatus 570 for agglomerating the reduced iron discharged from the second storage bin 550 may be further included.

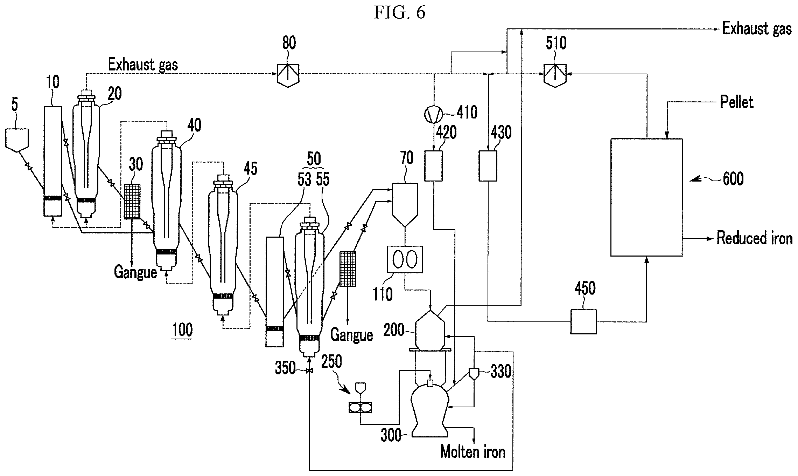

FIG. 6 illustrates a modified exemplary embodiment of the apparatus of manufacturing the ingot iron and the reduced iron illustrated in FIG. 4, and in which a second reduced iron manufacturing apparatus includes the shaft furnace 600.

The pellet obtained by agglomerating the fine iron ore is charged into the shaft furnace 600 to reduce the iron ore by blowing a reformed gas (exhaust gas from which carbon dioxide is removed) obtained by removing carbon dioxide from the exhaust gas, and thus the reduced iron is manufactured.

FIGS. 5 and 6 are views illustrating an apparatus for manufacturing an ingot iron and a reduced iron according to another exemplary embodiment of the present invention.

As illustrated in FIGS. 5 and 6, the apparatus for manufacturing the ingot iron and the reduced iron according to the present invention includes a first reduction apparatus 100 including a multi-stage fluidized-reduction furnace and a magnetic separator, a charge bin 200 for storing or further reducing the reduced iron manufactured by the first reduction apparatus 100, a melting gasifier 300 into which the reduced iron discharged from the charge bin 200 and a breeze supplied from an outside are charged and oxygen is blown to manufacture the ingot iron and a reduction gas, a second reduction apparatus 500 disposed to be spaced apart from the first reduction apparatus 100 and including a multi-stage fluidized-reduction furnace 530 or a shaft furnace 600, and a first reforming apparatus 430 removing carbon dioxide from an exhaust gas that is discharged from the first reduction apparatus 100 and the second reduction apparatus 500 and then branched, the reduction gas discharged from the melting gasifier 300 being mixed with the exhaust gas from which carbon dioxide is removed, and then supplied to the first reduction apparatus 100 and the second reduction apparatus 500.

The first reduction apparatus 100 includes the reduction apparatus of the fine direct reduced iron based on the aforementioned FIGS. 1 to 3.

The reduced iron manufactured in the first reduction apparatus 100 is stored in the charge bin 200 before being charged into a melting reduction furnace 300 for final reduction. The reduced iron stored in the charge bin 200 may be further reduced by the reduction gas generated in the melting reduction furnace 300.

The reduced iron manufactured using the first reduction apparatus 100 may be temporarily stored in a first storage bin 70 before being supplied to the charge bin 200.

The reduced iron discharged from the first storage bin 70 may be supplied to the charge bin 200 by being agglomerated through a first agglomerating body manufacturing apparatus 110 before being supplied to the charge bin 200.

The reduced iron discharged from the charge bin 200 and a breeze supplied from an external breeze supplier 250 are charged and oxygen is then blown into the melting reduction furnace 300 to melt the reduced iron by combustion heat of the breeze to manufacture the ingot iron and generate the reduction gas by combustion of the breeze.

The second reduction apparatus 500 is disposed to be spaced apart from the first reduction apparatus 100 including the multi-stage fluidized-reduction furnace and the magnetic separator, and reduces the iron ore to manufacture the reduced iron. The second reduction apparatus 500 may include the multi-stage fluidized-reduction furnace 530 or the shaft furnace 600.

Further, the first reforming apparatus 430 removes carbon dioxide from the exhaust gas that is discharged from the first reduction apparatus 100 and the second reduction apparatus 500 and then branched.

The exhaust gas from which carbon dioxide is removed is mixed with the reduction gas discharged from the melting gasifier 300, and the reduction gas mixed with the exhaust gas from which carbon dioxide is removed is supplied to the first reduction apparatus 100 and the second reduction apparatus 500.

In the case where the reduction gas discharged from the melting gasifier 300 is rich, the reduction gas may be supplied to the second reduction apparatus 500 as well as the first reduction apparatus 100 to increase a production capacity of the ingot iron and the reduced iron.

The case where the capacity of the reduction gas generated in the melting gasifier 300 is increased may correspond to the case where the capacity of the breeze charged into the melting gasifier 300 is increased, that is, the case where a coal ratio is increased.

That is, the reduction gas may be supplied to the reduction apparatus (e.g., first reduction apparatus) directly connected to the melting gasifier 300 and the separately installed reduced iron manufacturing apparatus (e.g., second reduction apparatus) by increasing the coal ratio to generate a large amount of the reduction gas in the melting gasifier 300 to increase productivity of the ingot iron and the reduced iron.

A portion of the reduction gas discharged from the melting gasifier 300 and then mixed with the exhaust gas from which carbon dioxide is removed may be supplied to the charge bin 200 and thus be used to further reduce the reduced iron stored in the charge bin 200.

The reduction gas discharged from the melting gasifier 300 and then mixed with the exhaust gas from which carbon dioxide is removed passes through a particle separation apparatus 330 to separate particles, the separated particles are re-charged into the melting gasifier 300, and the reduction gas from which the particles are separated is supplied to the first reduction apparatus 100 and the second reduction apparatus 500.

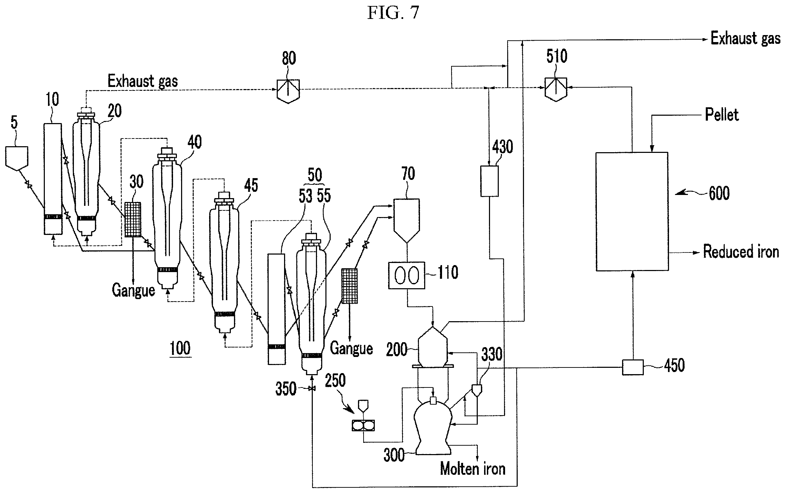

FIG. 7 illustrates a modified exemplary embodiment of the apparatus for manufacturing the ingot iron and the reduced iron illustrated in FIG. 5, and in which a second reduced iron manufacturing apparatus 500 includes the shaft furnace 600.

The pellet obtained by agglomerating the fine iron ore is charged into the shaft furnace 600 to reduce the iron ore by blowing a reformed gas (exhaust gas from which carbon dioxide is removed) obtained by removing carbon dioxide from the exhaust gas, and thus the reduced iron is manufactured.

A method of manufacturing an ingot iron and a reduced iron according to another exemplary embodiment of the present invention includes manufacturing the reduced iron by performing magnetic separation while reducing a fine iron ore by using a multi-stage fluidized-reduction furnace and a magnetic separation apparatus, manufacturing the ingot iron and a reduction gas by charging the reduced iron and a breeze supplied from an outside into a melting gasifier and then blowing oxygen, further manufacturing the reduced iron by reducing the fine iron ore or a pellet using a reduction apparatus disposed to be spaced apart from the multi-stage fluidized-reduction furnace, and branching an exhaust gas discharged from the multi-stage fluidized-reduction furnace and the reduction apparatus and then removing carbon dioxide, the reduction gas manufactured in the melting gasifier being supplied to the multi-stage fluidized-reduction furnace, and the exhaust gas from which carbon dioxide is removed being supplied to the reduction apparatus.

The reduced iron manufactured by the multi-stage fluidized-reduction furnace and the magnetic separation apparatus may be supplied to a charge bin to be temporarily stored or further reduced before being charged into the melting gasifier.

After a portion of the exhaust gas discharged from the multi-stage fluidized-reduction furnace is branched, carbon dioxide may be removed therefrom, and the portion of the exhaust gas may be mixed with the reduction gas discharged from the melting gasifier.

Particles may be separated from the reduction gas discharged from the melting gasifier and then mixed with the exhaust gas from which carbon dioxide is removed, the separated particles may be re-charged into the melting gasifier, and the reduction gas from which the particles are separated may be supplied to the multi-stage fluidized-reduction furnace or the charge bin.

The reduction apparatus is the multi-stage fluidized-reduction furnace or a shaft furnace.

Meanwhile, a method of manufacturing an ingot iron and a reduced iron according to another exemplary embodiment of the present invention includes manufacturing the reduced iron by performing magnetic separation while reducing a fine iron ore by using a multi-stage fluidized-reduction furnace and a magnetic separation apparatus, manufacturing the ingot iron and a reduction gas by charging the reduced iron and a breeze supplied from an outside into a melting gasifier and then blowing oxygen, and further manufacturing the reduced iron by reducing the fine iron ore or a pellet by a reduction apparatus disposed to be spaced apart from the multi-stage fluidized-reduction furnace, the reduction gas manufactured in the melting gasifier being supplied to the multi-stage fluidized-reduction furnace and the reduction apparatus.

After a portion of the exhaust gas discharged from the multi-stage fluidized-reduction furnace is branched, carbon dioxide may be removed therefrom, and the portion of the exhaust gas may be mixed with the reduction gas discharged from the melting gasifier.

Hereinafter, a method of reducing the fine iron ore according to the present invention will be described in detail through an Example. However, the following Example is set forth to illustrate the present invention, but the content of the present invention is not limited by the following Example.

### <Example>

In the case where high grade hematite having the total metallic iron (T.Fe) content of 62% and containing 3.76% of SiO₂ and 2.23% of Al₂O₃ among the gangue components was mixed with limestone and dolomite which were supplementary materials to be fluidization-reduced in the fluidized-reduction furnace at 450°C, the iron ore was converted into the reduced ore having the reduction ratio of 10%, that is, magnetite, in the fluidized bed.

In this case, the content of silica (SiO₂) of the iron ore in the fluidized bed was 3.60% and the content of alumina (Al₂O₃) was 1.65%, but in the ultra-minute powder scattered in the same reactor, the content of SiO₂ was increased to 4.50% and the content of Al₂O₃ was increased to 1.67%, and particularly, the content of SiO₂ of the ultra-minute powder not collected by the cyclone in the reactor but scattered and lost was 7.80% and the content of Al₂O₃ was 4.83%, and thus the content of the gangue was largely increased.

Accordingly, after the gangue of the scattered ultra-minute powder having the high gangue content was separated and removed, when recycling was performed, the content of the gangue component in the reduced iron was reduced and thus the high grade reduced iron could be manufactured.

Meanwhile, in the case where separation of the gangue was not sufficient in the reduction step of magnetite, by performing additional fluidization reduction, the content of the ultra-minute powder was increased by additional degradation in the final fluidization reduction step at 750°C, and the content of the gangue in the ultra-minute powder was increased, and thus the content of SiO₂ was 5.15% and the content of Al₂O₃ was 2.63%, which represented high contents as compared to the SiO₂ content of 4.17% and the Al₂O₃ content of 2.03% of the reduced iron in the reactor. Accordingly, the gangue component could be further removed by performing magnetic separation of the metallic iron and the gangue of the ultra-minute powder.

In the case of the Example of the present invention, the reduction gas supply pressure was 3.8 bar, the exhaust gas flow rate was 180,000 Nm³/hr, the temperature of the reactor was 750°C (final reduction furnace), 700°C (intermediate reduction furnace), and 450°C (pre-reduction furnace).

**(Table 1)**

| Analysis results of the reduced iron component discharged from the final reduction furnace before and after the present invention is applied | | | |
|---|---|---|---|
| Comparison items | Magnetic separation is not applied | After pre-reduction furnace magnetic separation | After pre-reduction furnace and final reduction furnace magnetic separation |
| Reduction | 60 | 60 | 60 |
| ratio (%) | | | |
| SiO₂ (%) | 4.3 | 3.3 | 2.5 |
| Al₂O₃ (%) | 2.5 | 2.0 | 1.6 |

In the case where the reduced iron was manufactured by the fluidization reduction process where the gangue component contained in the ultra-minute powder was removed by magnetic separation in the reduction step of magnetite of the fluidization reduction process, from a comparison result with an operation result in the existing fluidized-reduction furnace, it could be confirmed that the reduction ratios of the reduced iron were the same but the contents of SiO₂ and Al₂O₃ that were the gangue components were largely reduced.

Further, as illustrated in FIGS. 4 to 7, in the case where the reduction o gas obtained by reforming the exhaust gas was supplied to the separate reduction apparatus and the case where the reduction gas generated in the melting gasifier was branched and supplied to individual reduction apparatuses according to the exemplary embodiment and the modified exemplary embodiment of the present invention, production amounts and reduction ratios of the reduced iron were evaluated.

### Table

As described in Table 2, it can be seen that the reduced iron having the high reduction ratio or the same level of reduction ratio can be further produced.

**(Table 2)**

| Production amount and reduction ratio of the reduced iron further produced by applying the present invention | | | | | | |
|---|---|---|---|---|---|---|
| Classification | Case where the separate reduction apparatus is not added | | Case where the separate reduction apparatus is added | | | |
| | Before magnetic separation | After magnetic separation (pre- and final reduction step) | Fluidization reduction apparatus | | Pellet reduction apparatus | |
| | | | Case where the reduction gas obtained by reforming the exhaust gas is supplied tc the separate reduction apparatus | Case where the reduction gas generated in the melting gasifier is branched to be supplied to the reduction apparatus | Case where the reduction gas obtained by reforming the exhaust gas is supplied to the separate reduction apparatus | Case where the reduction gas generated in the melting gasifier is branched to be supplied to the separate reduction apparatus |
| Reduced iron production amount (t/d) | 112 | 110 | 128 | 110 | 100 | 110 |
| Reduction ratio (%) | 60 | 60 | 65 | 60 | 85 | 60 |

The present invention may provide an apparatus and a method of manufacturing a reduced iron, in which a gangue component of a low grade ore can be effectively removed and separated in a fluidization reduction process.

That is, in a step of generating magnetite from hematite of the fluidization reduction process of an iron ore, ultra-minute powder (ultra-fine iron ore) generated in a large amount by reduction degradation due to volume expansion and impact during fluidization is scattered to be mostly collected by a cyclone in a fluidized-reduction furnace and thus recycled or to be discharged to the outside of a fluidized-reduction reactor and thus lost.

Since the ultra-minute powder scattered in the fluidized-reduction reactor contains a large amount of gangue, if only the gangue is effectively separated and removed by magnetic separation by using a magnetic property of magnetite, the low grade ore may be converted into a high grade ore by performing mineral dressing in the fluidization reduction process to reduce a gangue content of the ore in the fluidized-bed reactor.

Further, in the case where separation of the gangue in the step of generating magnetite is not sufficient, reduction may be continuously performed through an additional fluidization reduction process, and the gangue included in the ultra-minute powder may be removed by magnetic separation in a final reduction step where a metallic iron is generated and degradation occurs to further improve the grade of a reduced iron manufactured in the fluidization reduction process and reduce an amount of slag generated when an ingot iron is manufactured by using the same, thus reducing a reducing agent ratio.

Further, the reduced iron may be further produced by supplying a reformed gas obtained by reforming an exhaust gas discharged from a reduction apparatus to a separately installed reduction apparatus, and productivity of the reduced iron may be increased by branching a reduction gas discharged from a melting gasifier and supplying the reduction gas to individual reduction apparatuses.

Although the exemplary embodiments of the present invention have been described with reference to the accompanying drawings, it will be apparent to those skilled in the art that various modifications and changes may be made thereto without departing from the technical spirit or essential feature of the invention.

Therefore, the aforementioned embodiments should be understood to be exemplary but not limiting in any way. The scope of the present invention is represented by the claims as described later rather than the detailed description, and it is to be construed that all modifications and modified embodiments deduced from the meaning and the scope of the claims, and the equivalent concept thereto are included within the scope of the present invention.

## Claims

1. A reduction apparatus for reducing a fine iron ore comprising:
a granulated ore pre-reduction furnace (10) into which the fine iron ore is charged to be pre-reduced by a reduction gas;
an ultra-fine ore pre-reduction furnace (20) into which an ultra-fine ore, having a particle size range of 100µm or less, scattered in and discharged from the granulated ore pre-reduction furnace (10) is charged to be pre-reduced;
a first magnetic separator (30) separating and then discharging a gangue component from the ultra-fine ore reduced in the ultra-fine ore pre-reduction furnace (20);
at least one intermediate reduction furnace (40) into which the granulated ore reduced in and discharged from the granulated ore pre-reduction furnace (10) and the ultra-fine ore from which the gangue component is separated are charged to be further reduced and thus increase a reduction ratio of the granulated ore and the ultra-fine ore; and
a final reduction furnace (50) finally reducing the granulated ore and the ultra-fine ore reduced in and discharged from the intermediate reduction furnace (40) to manufacture a reduced iron.

2. The reduction apparatus of claim 1, wherein:
the intermediate reduction furnace (40) includes a plurality of sequentially connected fluidized-reduction furnaces (40, 45).

3. The reduction apparatus of claim 1 or 2, wherein:
the final reduction furnace (50) includes a granulated ore final reduction furnace (53) into which the granulated ore and the ultra-fine ore reduced in the intermediate reduction furnace (45) are charged to manufacture the reduced iron; and
an ultra-fine ore final reduction furnace (55) into which the ultra-fine ore scattered in and discharged from the granulated ore final reduction furnace (53) is charged to manufacture the reduced iron.

4. The reduction apparatus of claim 3, further comprising:
a second magnetic separator for removing the gangue component from the reduced iron discharged from the ultra-fine ore final reduction furnace (55).

5. An apparatus for manufacturing an ingot iron and a reduced iron, comprising:
a first reduction apparatus (100) including the reduction apparatus according to any one of claims 1 to 4;
a charge bin (200) for storing or further reducing the reduced iron manufactured by the first reduction apparatus;
a melting gasifier (300) into which the reduced iron discharged from the charge bin and a breeze supplied from an outside are charged and oxygen is blown to manufacture the ingot iron and a reduction gas;
a second reduction apparatus (500) disposed to be spaced apart from the first reduction apparatus and including a multi-stage fluidized-reduction furnace (530) or a shaft furnace (600); and
a first reforming apparatus (430) removing carbon dioxide from an exhaust gas that is discharged from the first reduction apparatus (100) and the second reduction apparatus (500) and then branched,
wherein the reduction gas manufactured in the melting gasifier (300) is supplied to the first reduction apparatus (100), and
the exhaust gas from which carbon dioxide is removed by the first reforming apparatus (430) is supplied to the second reduction apparatus (500).

6. The apparatus of claim 5, further comprising:
a second reforming apparatus (420) removing carbon dioxide from the exhaust gas before a portion of the exhaust gas discharged from the first reduction apparatus is branched and then mixed with the reduction gas discharged from the melting gasifier (300).

7. The apparatus of claim 6, further comprising:
a particle separation apparatus (330) separating particles from the reduction gas discharged from the melting gasifier (300) and then mixed with the exhaust gas from which carbon dioxide is removed, re-charging the separated particles into the melting gasifier (300), and
supplying the reduction gas from which the particles are separated to the first reduction apparatus (100) or the charge bin (200).

8. The apparatus of claim 7, further comprising:
a temperature increasing apparatus (450) for increasing a temperature of the exhaust gas to a predetermined temperature before the exhaust gas from which carbon dioxide is removed by the first reforming apparatus (100) is supplied to the second reduction apparatus (500).

9. The apparatus of claim 5, further comprising:
a first storage bin (70) for temporarily storing the reduced iron manufactured in the first reduction apparatus (100) before being supplied to the charge bin (200).

10. The apparatus of claim 9, further comprising:
a first agglomerating body manufacturing apparatus (110) for agglomerating the reduced iron discharged from the first storage bin (70) before being supplied to the charge bin (200).

11. The apparatus of claim 5, further comprising:
in the case where the second reduction apparatus (500) includes the multi-stage fluidized-reduction furnace (530),
a second storage bin (550) temporarily storing the reduced iron manufactured in the second reduction apparatus (500) before being manufactured in an agglomerate form.

12. The apparatus of claim 11, further comprising:
a second agglomerating body manufacturing apparatus (570) for agglomerating the reduced iron discharged from the second storage bin (550).

13. An apparatus for manufacturing an ingot iron and a reduced iron, comprising:
a first reduction apparatus (100) including the reduction apparatus according to any one of claims 1 to 4;
a charge bin (200) for storing or further reducing the reduced iron manufactured by the first reduction apparatus (100);
a melting gasifier (300) into which the reduced iron discharged from the charge bin (200) and a breeze supplied from an outside are charged and oxygen is blown to manufacture the ingot iron and a reduction gas;
a second reduction apparatus (500) disposed to be spaced apart from the first reduction apparatus (100) and including a multi-stage fluidized-reduction furnace (530) or a shaft furnace (600); and
a first reforming apparatus (430) removing carbon dioxide from an exhaust gas that is discharged from the first reduction apparatus (100) and the second reduction apparatus (500) and then branched,
wherein the reduction gas discharged from the melting gasifier (300) is mixed with the exhaust gas from which carbon dioxide is removed, and then supplied to the first reduction apparatus (100) and the second reduction apparatus (500).

14. The apparatus of claim 13, wherein:
a portion of the reduction gas discharged from the melting gasifier (300) and then mixed with the exhaust gas from which carbon dioxide is removed is supplied to the charge bin (200).

15. The apparatus of claim 13 or 14, further comprising:
a particle separation apparatus (330) separating particles and gases from the reduction gas that is discharged from the melting gasifier (300) and then mixed with the exhaust gas from which carbon dioxide is removed.

16. A method of manufacturing an ingot iron and a reduced iron, comprising:
manufacturing the reduced iron by performing magnetic separation while reducing a fine iron ore by using a multi-stage fluidized-reduction furnace (100) and a magnetic separation apparatus (30);
manufacturing the ingot iron and a reduction gas by charging the reduced iron and a breeze supplied from an outside into a melting gasifier (300) and then blowing oxygen;
further manufacturing the reduced iron by reducing the fine iron ore or a pellet using reduction apparatus (500) disposed to be spaced apart from the multi-stage fluidized-reduction furnace; and
branching an exhaust gas discharged from the multi-stage fluidized-reduction furnace (100) and the reduction apparatus (500) and then removing carbon dioxide,
wherein the reduction gas manufactured in the melting gasifier (300) is supplied to the multi-stage fluidized-reduction furnace (100), and
the exhaust gas from which carbon dioxide is removed is supplied to the reduction apparatus (500).

## Patentansprüche

1. Reduktionsvorrichtung zum Reduzieren eines Eisenfeinerzes, Folgendes umfassend:
einen Erzgranulat-Vorreduktionsofen (10), in dem das Eisenfeinerz geladen wird, um unter Einsatz eines Reduktionsgases vorreduziert zu werden;
einen Ultrafeinerz-Vorreduktionsofen (20), in den ein Ultrafeinerz mit einem Partikelgrößenbereich von bis zu 100 µm, verstreut in und ausgegeben aus dem Erzgranulat-Vorreduktionsofen (10), geladen wird, um vorreduziert zu werden;
einen ersten Magnetabscheider (30) zum Abscheiden und danach Ausgeben einer Taubgesteinkomponente aus dem in dem Ultrafeinerz-Vorreduktionsofen (20) reduzierten Ultrafeinerz;
wenigstens einen Zwischenreduktionsofen (40), in den das in dem Erzgranulat-Vorreduktionsofen (10) reduzierte und daraus ausgegebene Erzgranulat und das Ultrafeinerz, aus dem die Taubgesteinkomponente abgeschieden worden ist, geladen werden, um weiter reduziert zu werden und somit ein Reduktionsverhältnis des Erzgranulats zu dem Ultrafeinerz zu erhöhen; und
einen Abschlussreduktionsofen (50), der schließlich das Erzgranulat und das Ultrafeinerz, reduziert in und ausgegeben aus dem Zwischenreduktionsofen (40), reduziert, um ein reduziertes Eisen zu erzeugen.

2. Reduktionsvorrichtung nach Anspruch 1, wobei:
der Zwischenreduktionsofen (40) mehrere nacheinander geschaltete Fluidisierte-Reduktions-Öfen (40, 45) enthält.

3. Reduktionsvorrichtung nach Anspruch 1 oder 2, wobei:
der Abschlussreduktionsofen (50) Folgendes enthält: einen Erzgranulat-Abschlussreduktionsofen (53), in den das Erzgranulat und das Ultrafeinerz, reduziert in dem Zwischenreduktionsofen (45), geladen werden, um das reduzierte Eisen zu erzeugen; und
einen Ultrafeinerz-Abschlussreduktionsofen (55), in den das Ultrafeinerz, verstreut in und ausgegeben aus dem Erzgranulat-Abschlussreduktionsofen (53), geladen wird, um das reduzierte Eisen zu erzeugen.

4. Reduktionsvorrichtung nach Anspruch 3, ferner Folgendes umfassend:
einen zweiten Magnetabscheider zum Entfernen der Taubgesteinkomponente aus dem reduzierten Eisen, das aus dem Ultrafeinerz-Abschlussreduktionsofen (55) ausgegeben wird.

5. Vorrichtung zum Erzeugen eines Barreneisens und eines reduzierten Eisens, Folgendes umfassend:
eine erste Reduktionsvorrichtung (100), die die Reduktionsvorrichtung nach einem der Ansprüche 1 bis 4 enthält;
einen Ladungsbehälter (200) zum Lagern oder weiteren Reduzieren des reduzierten, unter Einsatz der ersten Reduktionsvorrichtung erzeugten Eisens;
eine Schmelzvergasungsvorrichtung (300), in die das aus dem Ladungsbehälter ausgegebene reduzierte Eisen und ein Luftstrom von außen geladen werden und Sauerstoff eingeblasen wird, um das Barreneisen und ein Reduktionsgas zu erzeugen;
eine zweite Reduktionsvorrichtung (500) angeordnet, von der ersten Reduktionsvorrichtung beabstandet zu sein, und einen Mehrstufen-Fluidisierte-Reduktions-Ofen (530) oder einen Schachtofen (600) enthaltend; und
eine erste Reformierungsvorrichtung (430), die Kohlendioxid aus einem Abgas entfernt, das aus der ersten Reduktionsvorrichtung (100) und der zweiten Reduktionsvorrichtung (500) ausgegeben und dann abgezweigt wird,
wobei das in der Schmelzvergasungsvorrichtung (300) erzeugte Reduktionsgas der ersten Reduktionsvorrichtung (100) zugeführt wird, und
das Abgas, aus dem durch die erste Reformierungsvorrichtung (430) Kohlendioxid entfernt worden ist, der zweiten Reduktionsvorrichtung (500) zugeführt wird.

6. Vorrichtung nach Anspruch 5, ferner Folgendes umfassend:
eine zweite Reformierungsvorrichtung (420), die Kohlendioxid aus dem Abgas entfernt, bevor ein Anteil des aus der ersten Reduktionsvorrichtung ausgegebenen Abgases abgezweigt und dann mit dem aus der Schmelzvergasungsvorrichtung (300) ausgegebenen Reduktionsgas vermischt wird.

7. Vorrichtung nach Anspruch 6, ferner Folgendes umfassend:
eine Partikelabscheidungsvorrichtung (330), die Partikel aus dem aus der Schmelzvergasungsvorrichtung (300) ausgegebenen und dann mit dem Abgas, aus dem Kohlendioxid entfernt worden ist, vermischten Reduktionsgas abscheidet, die abgeschiedenen Partikel wieder in die Schmelzvergasungsvorrichtung (300) lädt und
das Reduktionsgas, aus dem die Partikel abgeschieden worden sind, in die erste Reduktionsvorrichtung (100) oder in den Ladungsbehälter (200) zuführt.

8. Vorrichtung nach Anspruch 7, ferner Folgendes umfassend:
eine Temperaturerhöhungsvorrichtung (450) zum Erhöhen einer Temperatur des Abgases auf eine vorgegebene Temperatur, bevor das Abgas, von dem unter Einsatz der ersten Reformierungsvorrichtung (100) Kohlendioxid entfernt worden ist, der zweiten Reduktionsvorrichtung (500) zugeführt wird.

9. Vorrichtung nach Anspruch 5, ferner Folgendes umfassend:
einen ersten Lagerbehälter (70) zum vorläufigen Lagern des in der ersten Reduktionsvorrichtung erzeugten reduzierten Eisens (100), bevor es in den Ladungsbehälter (200) gegeben wird.

10. Vorrichtung nach Anspruch 9, ferner Folgendes umfassend:
eine erste Agglomerationskörper-Erzeugungsvorrichtung (110) zum Agglomerieren des reduzierten Eisens, das aus dem ersten Lagerbehälter (70) ausgegeben wird, bevor es in den Ladungsbehälter (200) gegeben wird.

11. Vorrichtung nach Anspruch 5, ferner Folgendes umfassend:
in dem Fall, in dem die zweite Reduktionsvorrichtung (500) den Mehrstufen-Fluidisierte-Reduktions-Ofen (530) enthält,
einen zweiten Lagerbehälter (550), in dem das in der zweiten Reduktionsvorrichtung (500) erzeugte reduzierte Eisen vorübergehend gelagert wird, bevor es in einer agglomerierten Form erzeugt wird.

12. Vorrichtung nach Anspruch 11, ferner Folgendes umfassend:
eine zweite Agglomerationskörper-Erzeugungsvorrichtung (570) zum Agglomerieren des reduzierten, aus dem zweiten Lagerbehälter (550) ausgegebenen Eisens.

13. Vorrichtung zum Erzeugen eines Barreneisens und eines reduzierten Eisens, Folgendes umfassend:
eine erste Reduktionsvorrichtung (100), die die Reduktionsvorrichtung nach einem der Ansprüche 1 bis 4 enthält;
einen Ladungsbehälter (200) zum Lagern oder weiteren Reduzieren des reduzierten, unter Einsatz der ersten Reduktionsvorrichtung (100) erzeugten Eisens;
eine Schmelzvergasungsvorrichtung (300), in die das aus dem Ladungsbehälter (200) ausgegebene reduzierte Eisen und ein Luftstrom von außen geladen werden und Sauerstoff eingeblasen wird, um das Barreneisen und ein Reduktionsgas zu erzeugen;
eine zweite Reduktionsvorrichtung (500), angeordnet, von der ersten Reduktionsvorrichtung (100) beabstandet zu sein, und einen Mehrstufen-Fluidisierte-Reduktions-Ofen (530) oder einen Schachtofen (600) enthaltend; und
eine erste Reformierungsvorrichtung (430), die Kohlendioxid aus einem Abgas entfernt, das aus der ersten Reduktionsvorrichtung (100) und der zweiten Reduktionsvorrichtung (500) ausgegeben und dann abgezweigt wird,
wobei das aus der Schmelzvergasungsvorrichtung (300) ausgegebene Reduktionsgas mit dem Abgas vermischt wird, aus dem Kohlendioxid entfernt worden ist, und es dann der ersten Reduktionsvorrichtung (100) und der zweiten Reduktionsvorrichtung (500) zugeführt wird.

14. Vorrichtung nach Anspruch 13, wobei:
ein Anteil des aus der Schmelzvergasungsvorrichtung (300) ausgegebenen und dann mit dem Abgas, aus dem Kohlendioxid entfernt worden ist, vermischten Reduktionsgases dem Ladungsbehälter (200) zugeführt wird.

15. Vorrichtung nach Anspruch 13 oder 14, ferner Folgendes umfassend:
eine Partikelabscheidungsvorrichtung (330), die Partikel und Gase aus dem aus der Schmelzvergasungsvorrichtung (300) ausgegebenen und dann mit dem Abgas, aus dem Kohlendioxid entfernt worden ist, vermischten Reduktionsgas abscheidet.

16. Verfahren zum Erzeugen eines Barreneisens und eines reduzierten Eisens, Folgendes umfassend:
Erzeugen des reduzierten Eisens durch Durchführen von Magnetabscheidung beim Reduzieren eines Eisenfeinerzes unter Einsatz eines Mehrstufen-Fluidisierte-Reduktions-Ofens (100) und einer Magnetabscheidungsvorrichtung (30);
Erzeugen des Barreneisens und eines Reduktionsgases durch Laden des reduzierten Eisens und eines Luftstroms von außen in eine Schmelzvergasungsvorrichtung (300) gefolgt von Einblasen von Sauerstoff;
ferner Erzeugen des reduzierten Eisens durch Reduzieren des Eisenfeinerzes oder eines Pellets unter Einsatz einer Reduktionsvorrichtung (500), derart angeordnet, dass sie von dem Mehrstufen-Fluidisierte-Reduktions-Ofen beabstandet ist; und
Abzweigen eines Abgases, das aus dem Mehrstufen-Fluidisierte-Reduktions-Ofen (100) und der Reduktionsvorrichtung (500) ausgegeben wird, gefolgt von Entfernen von Kohlendioxid,
wobei das in der Schmelzvergasungsvorrichtung (300) erzeugte Reduktionsgas dem Mehrstufen-Fluidisierte-Reduktions-Ofen (100) zugeführt wird, und
das Abgas, aus dem Kohlendioxid entfernt worden ist, der Reduktionsvorrichtung (500) zugeführt wird.

## Revendications

1. Appareil de réduction destiné à réduire un minerai de fer fin comportant :
un four de préréduction de minerai granulé (10) dans lequel le minerai de fer fin est chargé pour être préréduit par un gaz réducteur ;
un four de préréduction de minerai ultrafin (20) dans lequel un minerai ultrafin, ayant une taille de particules de l'ordre de 100 µm ou moins, dispersé dans le four de préréduction de minerai granulé (10) et évacué de celui-ci est chargé pour être préréduit ;
un premier séparateur magnétique (30) qui sépare et évacue ensuite un composant gangue du minerai ultrafin réduit dans le four de préréduction de minerai ultrafin (20) ;
au moins un four de réduction intermédiaire (40) dans lequel le minerai granulé réduit dans le four de préréduction de minerai granulé (10) et évacué de celui-ci et le minerai ultrafin d'où le composant gangue est séparé sont chargés pour être réduits davantage et augmenter ainsi un taux de réduction du minerai granulé et du minerai ultrafin ; et
un four de réduction finale (50) réduisant finalement le minerai granulé et le minerai ultrafin réduits dans le four de réduction intermédiaire (40) et évacués de celui-ci pour fabriquer un fer réduit.

2. Appareil de réduction selon la revendication 1, dans lequel :
le four de réduction intermédiaire (40) comprend une pluralité de fours en lit fluidisé reliés séquentiellement (40, 45).

3. Appareil de réduction selon la revendication 1 ou 2, dans lequel :
le four de réduction finale (50) comprend un four de réduction finale de minerai granulé (53) dans lequel le minerai granulé et le minerai ultrafin réduits dans le four de réduction intermédiaire (45) sont chargés pour fabriquer le fer réduit ; et
un four de réduction finale de minerai ultrafin (55) dans lequel le minerai ultrafin dispersé dans le four de réduction finale de minerai granulé (53) et évacué de celui-ci est chargé pour fabriquer le fer réduit.

4. Appareil de réduction selon la revendication 3, comportant en outre :
un second séparateur magnétique destiné à enlever le composant gangue du minerai réduit évacué du four de réduction finale de minerai ultrafin (55).

5. Appareil destiné à fabriquer un fer doux et un fer réduit, comportant :
un premier appareil de réduction (100) comprenant l'appareil de réduction selon l'une quelconque des revendications 1 à 4 ;
une trémie de chargement (200) destinée à stocker ou réduire davantage le fer réduit fabriqué par le premier appareil de réduction ;
un gazéificateur de fusion (300) dans lequel le fer réduit évacué de la trémie de chargement et un déplacement d'air fourni de l'extérieur sont chargés et de l'oxygène est soufflé pour fabriquer le fer doux et un gaz réducteur ;
un second appareil de réduction (500) disposé de façon à être espacé du premier appareil de réduction et comprenant un four de réduction en lit fluidisé à étages multiples (530) ou un four vertical (600) ; et
un premier appareil de reformage (430) enlevant le dioxyde de carbone d'un gaz d'échappement qui est évacué du premier appareil de réduction (100) et du second appareil de réduction (500) et qui est ensuite dérivé,
dans lequel le gaz réducteur fabriqué dans le gazéificateur de fusion (300) est fourni au premier appareil de réduction (100), et
le gaz d'échappement d'où le dioxyde de carbone est enlevé par le premier appareil de reformage (430) est fourni au second appareil de réduction (500).

6. Appareil selon la revendication 5, comportant en outre :
un second appareil (420) de reformage qui enlève le dioxyde de carbone du gaz d'échappement avant qu'une partie du gaz d'échappement évacué du premier appareil de réduction soit dérivée et mélangée ensuite avec le gaz réducteur évacué du gazéificateur de fusion (300).

7. Appareil selon la revendication 6, comportant en outre :
un appareil de séparation des particules (330) séparant les particules du gaz réducteur évacué du gazéificateur de fusion (300) et mélangé ensuite avec le gaz d'échappement d'où le dioxyde de carbone est enlevé, chargeant de nouveau les particules séparées dans le gazéificateur de fusion (300), et
la fourniture du gaz réducteur d'où les particules sont séparées au premier appareil de réduction (100) ou à la trémie de chargement (200).

8. Appareil selon la revendication 7, comportant en outre :
un appareil d'augmentation de la température (450) destiné à augmenter une température du gaz d'échappement jusqu'à une température prédéterminée avant que le gaz d'échappement d'où le dioxyde de carbone est enlevé par le premier appareil de reformage (100) soit fourni au second appareil de réduction (500).

9. Appareil selon la revendication 5, comportant en outre :
une première trémie de stockage (70) destinée à stocker temporairement le fer réduit fabriqué dans le premier appareil de réduction (100) avant d'être fourni à la trémie de chargement (200).

10. Appareil selon la revendication 9, comportant en outre :
un premier appareil de fabrication de corps d'agglomération (110) destiné à agglomérer le fer réduit évacué de la première trémie de stockage (70) avant d'être fourni à la trémie de chargement (200).

11. Appareil selon la revendication 5, comportant en outre :
dans le cas où le second appareil de réduction (500) comprend le four de réduction en lit fluidisé à étages multiples (530),
une seconde trémie de stockage (550) stockant temporairement le fer réduit fabriqué dans le second appareil de réduction (500) avant d'être fabriqué sous forme agglomérée.

12. Appareil selon la revendication 11, comportant en outre :
un second appareil de fabrication de corps d'agglomération (570) destiné à agglomérer le fer réduit évacué de la seconde trémie de stockage (550).

13. Appareil destiné à la fabrication d'un fer doux et d'un fer réduit, comportant :
un premier appareil de réduction (100) comprenant l'appareil de réduction selon l'une quelconque des revendications 1 à 4 ;
une trémie de chargement (200) destinée à stocker ou réduire davantage le fer réduit fabriqué par le premier appareil de réduction (100) ;
un gazéificateur de fusion (300) dans lequel le fer réduit évacué de la trémie de chargement (200) et un déplacement d'air fourni de l'extérieur sont chargés et de l'oxygène est soufflé pour fabriquer le fer doux et un gaz réducteur ;
un second appareil de réduction (500) disposé de façon à être espacé du premier appareil de réduction (100) et qui comprend un four de réduction en lit fluidisé à étages multiples (530) ou un four vertical (600) ; et
un premier appareil de reformage (430) qui enlève le dioxyde de carbone d'un gaz d'échappement qui est évacué du premier appareil de réduction (100) et du second appareil de réduction (500) et qui est ensuite dérivé,
dans lequel le gaz réducteur évacué du gazéificateur de fusion (300) est mélangé avec le gaz d'échappement d'où le dioxyde de carbone est enlevé, et fourni ensuite au premier appareil de réduction (100) et au second appareil de réduction (500).

14. Appareil selon la revendication 13, dans lequel :
une partie du gaz réducteur évacué du gazéificateur de fusion (300) et mélangé ensuite avec le gaz d'échappement d'où le dioxyde de carbone est enlevé est fournie à la trémie de chargement (200).

15. Appareil selon la revendication 13 ou 14, comportant en outre :
un appareil de séparation de particules (330) qui sépare les particules et les gaz provenant du gaz réducteur qui est évacué du gazéificateur de fusion (300) et mélangé ensuite au gaz d'échappement d'où le dioxyde de carbone est enlevé.

16. Procédé de fabrication d'un fer doux et d'un fer réduit, consistant à :
fabriquer le fer réduit en réalisant une séparation magnétique tout en réduisant un minerai de fer fin en utilisant un four de réduction en lit fluidisé à étages multiples (100) et un appareil de séparation magnétique (30) ;
fabriquer l'acier doux et un gaz réducteur en chargeant l'acier réduit et un déplacement d'air fourni de l'extérieur dans un gazéificateur de fusion (300) et en soufflant ensuite de l'oxygène ;
fabriquer en outre le fer réduit en réduisant le minerai de fer fin ou une pastille en utilisant un appareil de réduction (500) disposé de façon à être espacé du four de réduction en lit fluidisé à étages multiples ; et
dériver un gaz d'échappement évacué du four de réduction en lit fluidisé à étages multiples (100) et de l'appareil de réduction (500) et enlever ensuite le dioxyde de carbone,
dans lequel le gaz réducteur fabriqué dans le gazéificateur de fusion (300) est fourni au four de réduction en lit fluidisé à étages multiples (100), et
le gaz d'échappement d'où le dioxyde de carbone est enlevé est fourni à l'appareil de réduction (500).
